# EUROPÄISCHE PATENTSCHRIFT

(11) **EP 2 594 698 B1**
(45) Veröffentlichungstag und Bekanntmachung des Hinweises auf die Patenterteilung: **15.03.2017**
(21) Anmeldenummer: 13155153.3
(22) Anmeldetag: 11.02.2010
(51) Int. Cl.: E03D 13/00, E03C 1/28

(54) **Geruchsverschluss für ein Urinal**
Odor seal for a urinal
Fermeture anti-odeurs pour un urinoir

(30) Priorität: 12.02.2009 DE 102009008573
(43) Veröffentlichungstag der Anmeldung: 22.05.2013
(62) Teilanmeldung aus: 10705798.6
(73) Patentinhaber: Urimat Holding AG, 6072 Sachseln (CH)
(72) Erfinder: Schmed, Arthur, 8832 Wollerau (CH)
(74) Vertreter: Müller, Eckhard

(56) Entgegenhaltungen:
- WO-A1-2008/096092
- WO-A1-2009/040525
- DE-U1-202008 007 289
- US-A- 1 916 357

## Beschreibung

Die vorliegende Erfindung betrifft einen Geruchsverschluss für ein Urinal gemäß dem Oberbegriff des Anspruchs 1.

Geruchsverschlüsse für Urinale, insbesondere auch für wasserlos betriebene Urinale, dienen dazu, den Ablauf in das Abwasserrohrleitungsnetz so zu verschließen, dass das Austreten von Gerüchen aus den Abwasserrohren vermieden wird. Darüber hinaus sollen derartige Geruchsverschlüsse gewährleisten, dass sie Urin vollständig zu dem Ablauf hin abführen, damit keine Rückstände im Bereich des Geruchsverschlusses verbleiben. Zusätzlich werden üblicherweise auf die Einlauffläche des Geruchsverschlusses Reinigungssteine aufgelegt, die sich unter der Einwirkung von Urin auflösen und so eine reinigende und desinfizierende Wirkung entfalten.

Ein Geruchsverschluss für ein Urinal ist beispielsweise aus der CH 694 274 A5 bekannt. Dieser Geruchsverschluss umfasst einen Topf, der im oberen Bereich in der Mitte einer ringförmigen Einlauffläche eine Öffnung aufweist, die durch eine Verschlusskappe verschlossen ist. Die Verschlusskappe wird über einen Schaft von unten gegen den Rand der ringförmigen Einlauffläche gedrückt. Dieser verschlossene Zustand wird durch einen Magneten, der sich am unteren Ende des Schaftes befindet, und einen weiteren Magneten, der im Boden des Topfes eingesetzt ist, aufrechterhalten, indem sich die beiden Magnete gleicher Polarität abstoßen. Wenn sich eine ausreichende Menge an Urin und/oder Spülwasser auf der Verschlusskappe ansammelt, wird diese nach unten gedrückt, so dass die Flüssigkeit ablaufen kann.

Eine andere Art eines Geruchsverschlusses für ein Urinal ist aus der EP 1 076 739 B1 bekannt. Bei diesem Geruchsverschluss wird anstelle der Verschlusskappe nach der CH 694 274 A5, ein Schwimmkörper eingesetzt, der durch den Flüssigkeitsstand in dem Topf aufschwimmt und sich in die Öffnung der ringförmigen Einlauffläche einlegt.

Bekannt sind auch Geruchsverschlüsse in der Art eines Schlauchventils.

Die EP 1 972 727 A1 beschreibt einen Abflusseinsatz, der in den Ablauf eines Urinals eingesetzt wird. Dieser Abflusseinsatz weist einen sehr einfachen Aufbau auf mit einem Auslaufrohr, das an seinem oberen Ende eine Abdeckung besitzt, unterhalb der Hygienekapseln eingesetzt werden. Die Abdeckung besitzt an ihrem unteren Ende seitliche kleine Schlitze, über die Flüssigkeit eindringen kann.

Die GB 2 449 364 A beschreibt einen Einsatz für den Ablauf eines Urinals. Dieser Einsatz umfasst eine Abdeckung, unterhalb der ein parfümiertes, auflösbares Material eingesetzt ist. Die Abdeckung besitzt an ihrem unteren Rand Schlitze, die dann, wenn sie auf das entsprechende Unterteil aufgesetzt ist, Öffnungen bilden, um Flüssigkeit hindurchzulassen. An dem Unterteil befindet sich eine klappenartige Öffnung mit einem flexiblen Klappenverschluss, der sich unter dem Druck der Flüssigkeit öffnet und im geschlossenen Zustand einen Geruchsverschluss bildet.

Die EP 1 785 077 A1 beschreibt eine wasserlose Sanitäranlage, insbesondere ein wasserloses Urinal, in Form eines Einsatzes, der in das Abflussrohr eingesetzt wird. Im oberen Bereich befindet sich eine Abdeckung, unterhalb der ein Behältnis eingefügt ist, in dem beispielsweise ein desinfizierender Wirkstoff eingefüllt ist. Dieses Behältnis besitzt Kleinstöffnungen, über die Flüssigkeit eindringen kann, wenn der Wasserstand in dem Auffangraum steigt.

Aus der US 1 916 357 A ist eine Abdeckhaube für eine Ablauföffnung eines Urinals bekannt, mit einem darunter befindlichen Sieb, über dem sich radial erstreckende Arme befinden, auf die ein Reinigungsstein gelegt werden kann. Die Abdeckhaube weist um ihren Umfang verteilt zusätzliche Öffnungen auf, durch die der Verbrauchszustand des Reinigungssteins erkannt werden soll.

Ferner ist aus der WO 2008/096092 A1 ein Geruchsverschluss für ein Urinal bekannt, wobei als Verschlusselement für die Ablauföffnung ein Schwimmer dient. Über dem Verschlusselement ist eine domförmige Abdeckhaube angebracht, welche am unteren Rand um ihren Umfang gleichmäßige sowie gleichgroße verteilte Öffnungen aufweist, durch die der Urin ablaufen kann.

Die DE 20 20908 007 289 U, welche als nächster Stand der Technik angesehen wird, offenbart einen Gegenstand, bei dem in den Raum unter einer Abdeckhaube einer Ablauföffnung eines Urinals eine Paste oder Flüssigkeit zur Reinigung eingefüllt wird. Die Abdeckhaube ist dabei transparent. Die eingefüllte Paste oder Flüssigkeit ändert nach mehrmaligem Benutzen des Urinals die Farbe, wodurch der Verbrauchszustand signalisiert wird.

Geruchsverschlüsse, wie sie vorstehend angegeben sind, können sehr leicht durch Abfall, der in das Urinal geworfen wird, beispielsweise in Form von Zigarettenstummeln, verstopfen und damit undicht werden. Um zu vermeiden, dass solche Fremdstoffe in den Geruchsverschluss eintreten, werden häufig in das Urinal Drahtnetze eingelegt, die den Ablauf großflächig abdecken.

Bei herkömmlichen Geruchsverschlüssen sind auch keine Mittel vorgesehen, um den Reinigungsstein in einer Position in dem Urinal so zu halten, dass er seine größtmögliche Wirkung entfaltet. Dies gilt insbesondere für wasserlos betriebene Urinale, bei denen der Reinigungsstein nur durch die Einwirkung von Urin aufgelöst wird.

Der vorliegenden Erfindung liegt die Aufgabe zugrunde, einen Geruchsverschluss für ein Urinal so auszugestalten, dass auf einfache Weise, insbesondere ohne die Abdeckhaube öffnen oder entfernen zu müssen, erkennbar ist, ob unter der Abdeckhaube ein Reinigungsstein vorhanden ist oder ob ein dort eingelegter Reinigungsstein zwischenzeitlich verbraucht ist.

Gelöst wird diese Aufgabe durch einen Geruchsverschluss für ein Urinal mit den Merkmalen des Anspruchs 1.

Der erfindungsgemäße Geruchsverschluss hat den Vorteil, dass mit einfachen Mitteln ein Schutz gegen das Eintreten von Fremdstoffen in den Ablauf gewährleistet ist, und der darüber hinaus die Möglichkeit bietet, einen Reinigungsstein an einer definierten, wirkungsvollen Position in dem Urinal zu halten.

Dieser Geruchsverschluss umfasst eine Einlauffläche, die mindestens eine Ablauföffnung aufweist, auf die eine Abdeckhaube aufgesetzt ist. Die Abdeckhaube weist um ihren Umfang verteilt Öffnungen auf, und sie umschließt einen Raum, in den ein Reinigungsstein eingelegt ist. Mit einer solchen Abdeckhaube wird somit die Ablauföffnung der Einlauffläche abgedeckt und geschützt. Gleichzeitig bietet eine solche Abdeckhaube einen ausreichenden Raum, um einen Reinigungsstein in dem Urinal zu positionieren.

Weiterhin bietet eine besondere Ausgestaltung der Abdeckhaube die Möglichkeit, den Geruchsverschluss den jeweiligen Einsatzbedingungen, sowohl hinsichtlich Einsatzort als auch der zu erwartenden Häufigkeit der Benutzung des Urinals, anzupassen, wie noch nachfolgend erläutert wird.

Die Abdeckhaube weist vorzugsweise Öffnungen auf, durch die Urin in ausreichender Menge hindurchtreten kann. Diese Öffnungen befinden sich um den Umfang der Abdeckhaube verteilt, und zwar so, dass unterschiedliche Bereiche oder Sektoren eine unterschiedliche Anzahl von Öffnungen aufweisen, so dass die Abdeckhaube, je nach Einsatzort, in einer unterschiedlichen Orientierung auf die Ablauföffnung aufgesetzt werden kann. Damit der Reinigungsstein einer ausreichenden Menge an Flüssigkeit ausgesetzt wird, um seine Wirkung zu entfalten, können am unteren Rand der Abdeckhaube ausreichend große Durchlauföffnungen vorhanden sein. Auch diese Durchlauföffnungen am unteren Rand können auf unterschiedliche Bereiche des Rands verteilt werden.

Um in allen Stellungen der Abdeckhaube zu gewährleisten, dass, wie vorstehend erwähnt, eine ausreichend Menge an Urin in den Innenraum der Abdeckhaube eindringt, um den Reinigungsstein zu befeuchten, sollte die Abdeckhaube Öffnungen aufweisen, die bevorzugt gleichmäßig über den Umfang verteilt angeordnet sind. Vorzugsweise liegen solche Öffnungen auf einer gleichen Umfangslinie, d. h. Höhenlinie, um den Umfang der Abdeckhaube verteilt, so dass die Abdeckhaube zunächst aufgrund dieser Öffnungen in jeder Stellung die gleiche Wirkung besitzt. Das bedeutet, eine Abdeckhaube oder ein Geruchsverschluss mit solchen Öffnungen kann in jeder beliebigen Orientierung in ein Urinal eingebaut werden. Für solche ersten Öffnungen ist der obere Bereich der Abdeckhaube bevorzugt.

Die Abdeckhaube kann in Umfangsrichtung gesehen in mindestens zwei Sektoren unterteilt sein und weitere Öffnungen aufweisen, die dann derart um den Umfang der Abdeckhaube verteilt sind, dass jeder dieser zwei Sektoren oder Sektorbereiche eine unterschiedliche Anzahl Öffnungen aufweist. Einer der Sektoren kann hierbei nur die ersten Öffnungen umfassen, die ohnehin gleichmäßig über den gesamten Umfang der Abdeckhaube verteilt sind.

Vorzugsweise sollten die Sektoren eine gleiche Größe aufweisen. Das bedeutet, dass bei zwei Sektoren jeder Sektor einen Umfangsabschnitt der Abdeckhaube von 180° einnimmt, und sich bei Aufteilung der Abdeckhaube in drei Sektoren jeder Abschnitt über 120° erstreckt.

Nach der Erfindung kann die Abdeckhaube in Umfangsrichtung gesehen auch mindestens einen Bereich oder Sektor aufweisen, der frei von Öffnungen ist. Eine solche Maßnahme ist immer dann bevorzugt möglich, wenn die Abdeckhaube in mehr als zwei Sektoren, in Umfangsrichtung gesehen, unterteilt ist.

Ein solcher Sektorabschnitt der Abdeckhaube, der frei von Öffnungen ist, sollte eine Größe aufweisen, in Umfangsrichtung gesehen, 30° bis 45° einnimmt.

Eine solche Abdeckhaube, die in unterschiedliche Sektoren mit unterschiedlich vielen Öffnungen in den jeweiligen Sektoren aufgeteilt ist, kann dann in unterschiedlichen Orientierungen auf der Einlauffläche angeordnet werden, so dass einer der Sektoren der Abdeckhaube in einer bestimmten Stellung zu dem Urinal und damit zu dem Benutzer des Urinals hin ausgerichtet wird.

Urinale werden nämlich, je nachdem, wo sie installiert sind, unterschiedlich häufig benutzt. Dies hat zur Folge, dass dort, wo sie wenig benutzt werden, nur geringe Mengen des Reinigungssteins aufgelöst werden, während dort, wo sie häufig benutzt werden, der Reinigungsstein einem sehr schnellem Verbrauch unterliegt. Die Nutzung solcher Urinale reicht von beispielsweise 10 Benutzungen pro Woche bis zu 100 Benutzungen pro Stunde. Damit der Reinigungsstein eine gewisse Lebensdauer erzielt, um seine reinigende und desinfizierende Wirkung erzielen zu können, wird die Abdeckhaube dort, wo nur eine geringe Anzahl Benutzungen zu erwarten ist, so zu dem Benutzer des Urinals hin orientiert, dass ein Sektor der Abdeckhaube mit vielen Löchern Urin zum Inneren der Abdeckhaube hindurch lässt. Dadurch ist sichergestellt, dass ausreichende Flüssigkeit den Reinigungsstein erreicht. Im andern Fall wird dort, wo sehr häufige Benutzungen des Urinals zu erwarten sind, die Abdeckhaube so orientiert, dass ein Sektor mit wenigen Löchern nur wenig Flüssigkeit zu dem Reinigungsstein hindurch lässt.

Vorzugsweise wird die Abdeckhaube in drei Sektoren, jeweils mit einer unterschiedlichen Anzahl Löchern, unterteilt, so dass sie für eine geringe, mittlere oder häufige Benutzung an dem Geruchsverschluss und/oder an dem Urinal durch entsprechende Orientierung des Topfes beim Einbau in das Urinal ausgerichtet werden kann. Zwecks richtiger Montage werden diese Sektoren gut sichtbar gekennzeichnet, beispielsweise mit römischen Ziffern I, II, III oder mit den Buchstaben A, B, C.

Die Maßnahme, dass bei mehreren Sektoren, insbesondere bei drei Sektoren oder mehr, in die die Abdeckhaube unterteilt ist, die einzelnen Sektoren eine unterschiedliche Anzahl von Sektoren aufweisen, ist auch dann im Sinne der Erfindung gegeben, wenn einer der Sektoren keine dieser Öffnungen aufweist.

Die Öffnungen, die mit unterschiedlichen Anzahlen auf die verschiedenen Sektoren der Abdeckhaube verteilt sind, sollten solche Öffnungen sein, die von dem unteren Rand der Abdeckhaube beabstandet sind.

Falls die Abdeckhaube sowohl erste Öffnungen als auch zweite Öffnungen aufweist, wie dies vorstehend erwähnt ist, sollten die einen Öffnungen, beispielsweise die ersten Öffnungen, gleichmäßig über den Umfang der Abdeckhaube verteilt angeordnet sein, um über diese Öffnungen sicherzustellen, dass in jeder Stellung der Abdeckhaube ausreichende Flüssigkeit an den Reinigungsstein gelangt. Die weiteren Öffnungen werden dann in unterschiedlichen Anzahlen auf die jeweiligen Sektoren verteilt.

Die Abdeckhaube bietet auch die Möglichkeit, ein auf die Einlauffläche aufgesetztes Sieb zentriert über dem Ablaufstutzen zu halten. Ein solches Sieb begradigt zum einen die Einlauffläche und hält zum anderen einen Reinigungsstein in einem bestimmten Abstand oberhalb der Einlauffläche und dem Ablauf, so dass Urin ungehindert ablaufen kann. Ein solches Sieb stellt eine zusätzliche Barriere zum Zurückhalten von Schmutzpartikeln und Haaren dar.

Um einfach zu erkennen, ob ein Reinigungsstein, der sich unterhalb der Abdeckhaube befindet, verbraucht ist oder nicht, wird nach dem grundlegenden Gedanken der Erfindung das Sieb, auf dem der Reinigungsstein aufsitzt, farblich derart gestaltet, dass sich dessen Farbe deutlich unterscheidbar von der Farbe der Abdeckhaube absetzt. Wenn der Reinigungsstein abgenutzt ist, wird dadurch das Sieb durch die Öffnung in der Abdeckhaube sichtbar, so dass nur durch visuelle Prüfung der Verbrauch des Reinigungssteins erkannt werden kann. Es besteht auch die Möglichkeit, die Haube transparent oder rauchig transparent zu gestalten. Als Farbe für das Sieb bietet sich eine leuchtende Farbe, beispielsweise rot oder gelb, an.

Ein ähnlicher Effekt kann auch dann erzielt werden, wenn zumindest der sich unter der Abdeckhaube befindliche Bereich der Einlauffläche farblich von der Farbe der Abdeckhaube abgesetzt wird, so dass die Farbe der Einlauffläche deutlich durch die Öffnungen in der Abdeckhaube dann erkennbar wird, wenn kein Reinigungsstein vorhanden oder ein solcher Reinigungsstein im Wesentlichen verbraucht ist.

Bevorzugt ist der gesamte Geruchsverschluss im Wesentlichen rotationssymmetrisch zu einer Längsachse aufgebaut. Hierzu kann die Abdeckhaube eine Rotationssymmetrie um eine Achse aufweisen, die senkrecht auf der Einlauffläche steht.

Möglich ist auch eine domförmige Form der Abdeckhaube, die einen ausreichenden Raum auch für quaderförmige Reinigungssteine zur Verfügung stellt, aber dennoch ein sicheres Ablaufen von Flüssigkeit auf deren Außenseite gewährleistet. Aufgrund der abgerundeten Form der Abdeckhaube trifft ein Urin-Strahl praktisch immer tangential auf die Abdeckhaube, so dass ein zu starkes Spritzen vermieden wird.

Die Abdeckhaube ist, wie bereits vorstehend erwähnt, so gestaltet, dass am unteren Rand ein so dimensionierter Ringspalt und damit Durchlassöffnungen entstehen, dass einerseits Urin abfließen kann, jedoch andererseits Abfallreste, wie Zigarettenstummel, zurückgehalten werden. Damit wird auch gewährleistet, dass der Siphon nicht verstopft.

Eine solche Abdeckhaube, wie sie hier beschrieben ist, bietet auch die Möglichkeit, sie als Verriegelungselement von Einlauffläche und einem sich darunter befindlichen Topf oder anderer Teile des Geruchsverschlusses zu verwenden. Hierzu wird/werden die Abdeckhaube und/oder die Einlauffläche oder ein sich darunter befindlicher Topf mit Verriegelungsteilen versehen, die sich miteinander verbinden. Hierzu können an der Abdeckhaube Verriegelungsteile vorgesehen werden, die die Abdeckhaube an der Einlauffläche lösbar halten.

In Verbindung mit den vorstehenden Verriegelungsteilen kann der untere Rand der Abdeckhaube durch die Verriegelungsteile in konstruktiv einfacher Weise so auf Abstand zu der Einlauffläche gehalten werden, dass sich dadurch der Ringspalt bzw. Durchlassöffnungen ergeben.

Die Abdeckhaube, die Einlauffläche sowie das Sieb können aus Polypropylen gefertigt werden.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnung. Dabei bilden sämtliche beschriebenen sowie bildlich wiedergegebenen Merkmale in ihrer sinnvollen Kombination den Gegenstand der Erfindung, wie formuliert in den Patentansprüchen und deren Rückbezügen.

In der Zeichnung zeigt
- Figur 1: eine perspektivische Ansicht eins Ausführungsbeispiels eines erfindungsgemäßen Geruchsverschlusses mit Abdeckhaube, Einlauffläche und Dichtring in einer ersten Ausführungsform,
- Figur 2: eine Ansicht entsprechend der Figur 1, allerdings mit einer unterschiedlichen Anordnung von Öffnungen in der Abdeckhaube,
- Figur 3: eine perspektivische, schematische Darstellung des erfindungsgemäßen Geruchsverschlusses in einem Längsschnitt,
- Figur 4: eine schematische Seitenansicht einer Abdeckhaube, wie sie beispielsweise in Figur 2 dargestellt ist,
- Figur 5: eine Draufsicht auf die Abdeckhaube der Figur 4 aus Richtung des Sichtpfeils V in Figur 4, um die Aufteilung der Abdeckhaube in drei Sektoren zu verdeutlichen,
- Figur 6: eine schematische Seitenansicht einer weiteren Abdeckhaube, vergleichbar mit derjenigen der Figur 4, und
- Figur 7: eine Draufsicht auf die Abdeckhaube der Figur 6 aus Richtung des Sichtpfeils VII in Figur 6, um die Aufteilung der Abdeckhaube in drei Sektoren und die Verteilung der Öffnungen zu zeigen.

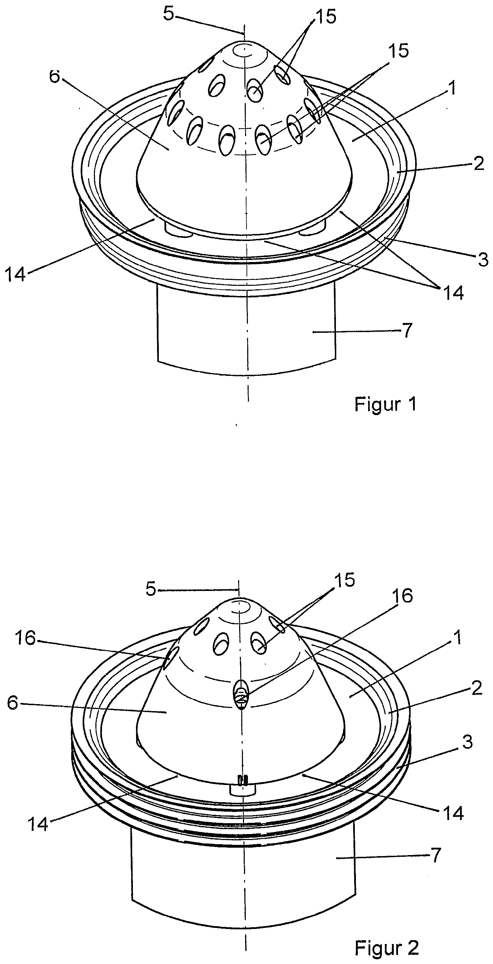

In den Figuren 1 bis 3 ist von einem Geruchsverschluss für ein Urinal nur der obere Teil gezeigt, der in den Ablauf des Urinals eingesetzt wird.

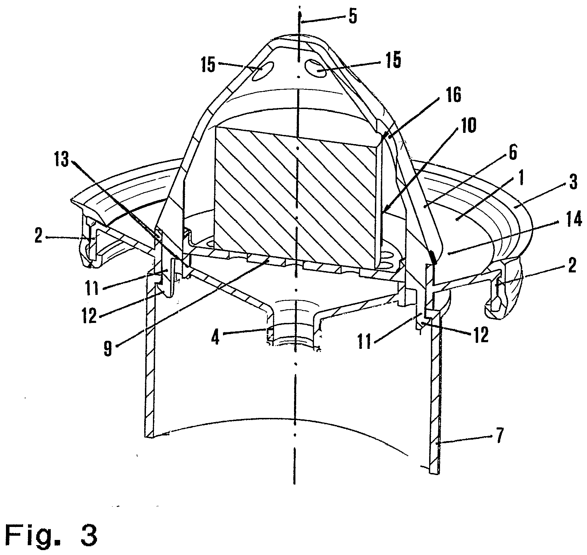

Dieser obere Teil umfasst eine Einlauffläche 1, die eine kreisrunde Außenkontur aufweist. Auf den Rand 2 dieser Einlauffläche 1 ist, wie in Figur 3 zu erkennen ist, eine umlaufende Dichtung 3 aufgesetzt, mit der sich der Geruchsverschluss in dem Ablauf eines Urinals dichtend einsetzt.

Die Einlauffläche 1 verläuft zur Mitte, in der sich ein Ablaufstutzen 4 befindet, hin leicht trichterförmig. Um einen Ablauf auch geringster Flüssigkeitsmengen sicherzustellen, die sich in der Kammer ansammeln, sollte die Einlauffläche 1 eine Schräge von mindestens 2 Grad aufweisen, damit Flüssigkeit abläuft. Somit können sich keine Gerüche durch rückständigen Urin entwickeln.

Zentriert zu dem Ablaufstutzen 4, angedeutet mit einer strichpunktierten Linie 5, ist auf die Einlauffläche 1 eine Abdeckhaube 6 aufgesetzt.

Unterhalb der Einlauffläche 1 befindet sich, in den Figuren nur angedeutet, ein topf- oder rohrförmiges Teil 7, in dem sich die weiteren Teile des Geruchsverschlusses befinden, beispielsweise eine Ventil- oder Verschlussanordnung, wie sie einleitend anhand des Stands der Technik erläutert wurde. Diese Ventil- oder Verschlussanordnung ist allerdings nicht für den hier beschriebenen Gegenstand der Erfindung wesentlich.

Die Einlauffläche 1 besitzt einen Durchmesser, der größer als der Außendurchmesser des topf- oder rohrförmigen Teils 7 ist. An dem äußeren Rand 2 der so außen über das Teil 7 überstehenden Einlauffläche 1 ist ein nach unten weisendes Flächenteil 8 vorhanden, das um die Einlauffläche 1 herumläuft und eine Art Flansch bildet. Auf dieses Flächenteil bzw. diesen Flansch 8 ist die Dichtung 3 aufgesetzt. Diese Dichtung 3 besitzt ein C-förmiges Querschnittsprofil, so dass es den oberen Rand und den unteren Rand des Flansches 8 umgreift. Mit dieser Dichtung 3 wird der Geruchsverschluss in ein Urinal eingesetzt.

Im unteren Bereich der Abdeckhaube 6 befindet sich ein Sieb 9, das in der Schnittdarstellung der Figur 3 zu sehen ist. Auf diesem Sieb 9 ist ein Reinigungsstein 10 aufgelegt, der eine zylindrische Form besitzt, so dass er annähernd den gesamten Innenraum der Abdeckhaube 6 ausfüllt.

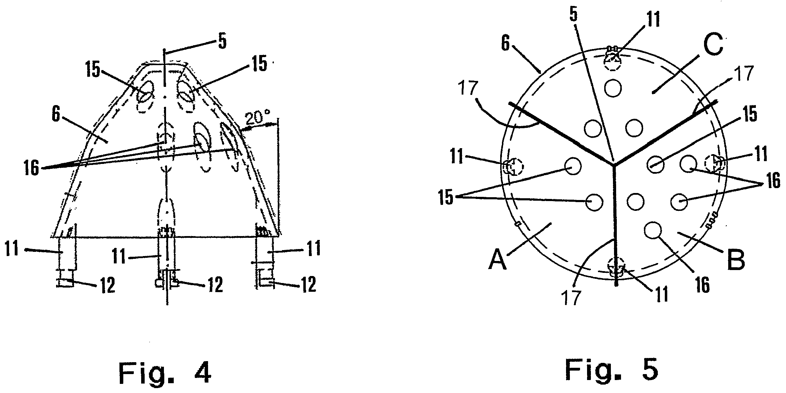

Die Abdeckhaube 6 besitzt an ihrem unteren Ende, gleichmäßig um den Umfang verteilt, mehrere Verriegelungsteile 11, die in den Figuren 3 und 4 zu erkennen sind. In dem gezeigten Ausführungsbeispiel sind insgesamt vier solcher Verriegelungsteile 11 vorhanden. Diese Verriegelungsteile erstrecken sich durch entsprechende Ausnehmungen in der Einlauffläche 1 und hintergreifen mit ihren hakenförmigen Enden 12 Bereiche des topf- oder rohrförmigen Teils 7. Dadurch werden mit diesen Verriegelungsteilen 11 und dadurch mit der Abdeckhaube 6 alle Teile zusammengehalten. Durch diesen Aufbau ist ein einfacher Zusammenbau der entsprechenden Teile möglich.

Um den unteren Rand der Abdeckhaube 6, aber auch das Sieb 9, in einem bestimmten Abstand oberhalb der Einlauffläche 1 zu positionieren, sind an der Einlauffläche 1 rohrförmige Distanzringe 13 angeformt, auf denen der Rand der Abdeckhaube 6 aufliegt. Dadurch werden zwischen dem unteren Rand der Abdeckhaube 6 und der Einlauffläche 1 sektorförmige Durchlassöffnungen 14 gebildet, die den Ablauf größerer Mengen an Urin zu dem Ablaufstutzen 4 hin zulassen.

Wie in Figur 3 zu sehen ist, dienen die rohrförmigen Distanzringe gleichzeitig als Auflage für das Sieb 9.

Wie die Figuren 1, 2, 4 und 5 zeigen, sind über den Umfang der Abdeckhaube 6 herum mehrere Öffnungen verteilt, die in erste Öffnungen 15 und weitere Öffnungen 16 unterteilt werden können.

Die ersten Öffnungen 15 liegen, wie in der Draufsicht der Figur 5 zu erkennen ist, auf einer Umfangslinie gleicher Höhe, und die sechs Öffnungen 15 sind darüber hinaus gleichmäßig zueinander beabstandet. In der Ausführungsform der Figur 1 ist eine weitere Reihe erster Öffnungen 15 vorhanden, die auf einer weiteren, etwas tiefer liegenden Umfangslinie liegen.

Die weiteren Öffnungen 16 sind, wie die Figur 5, auch in Verbindung mit der Figur 4, zeigt, auf zwei von drei Sektoren A, B und C verteilt, wobei dem Sektor B drei der weiteren Öffnungen 16 zugeordnet sind, dem Sektor C eine der weiteren Öffnungen 16 zugeordnet ist, während der Sektor A keine dieser weiteren Öffnungen 16 umfasst.

Die Sektoren A, B und C erstrecken sich jeweils über einen Umfangsabschnitt der Abdeckhaube von 120°.

Die Linien 17 in Figur 5, die die Sektoren A, B und C markieren, können auf der Abdeckhaube 6 erkennbar sein, ebenso wie die Sektoren-Bezeichnungen A, B und C, oder andere Sektoren-Bezeichnungen, wie beispielsweise I, II, III, um beim Einbau des Geruchsverschlusses die richtige, für den Anwendungsfall erforderliche Ausrichtung zu erleichtern.

Bei dem Einbau des Geruchsverschlusses in ein Urinal wird dieser in seiner Gesamtheit, oder aber nur die Abdeckhaube 6, so gedreht, dass nur ein bestimmter Sektor A, B oder C und damit eine bestimmte Gruppen der Öffnungen 15 und 16 zu dem Benutzer des Urinals hinweist. Dadurch kann, in Abhängigkeit von der Frequentierung des Urinals, der Reinigungsstein 10 definiert feucht gehalten werden, um eine effektive und lang anhaltende Reinigungs- und Desinfektionswirkung mit einem Reinigungsstein 10 zu erreichen.

Die Aufteilung der Sektoren in ihrer Größe und Form sowie die Verteilung der Öffnungen 16 und 17 auf die Sektoren sind nicht auf die in den Figuren 1 bis 5 gezeigten Beispiele beschränkt. Vielmehr kann diese Aufteilung den jeweiligen Anwendungsfällen angepasst werden.

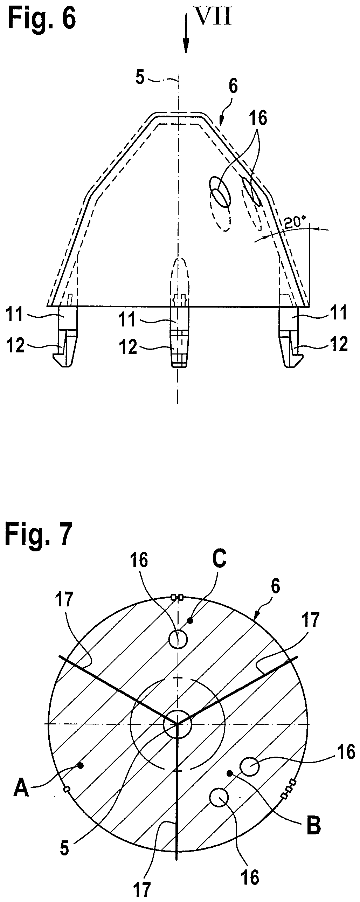

Die Figuren 6 und 7 zeigen ein weiteres Ausführungsbeispiel einer Abdeckhaube 6, die mit derjenigen vergleichbar ist, die vorstehend anhand der Figuren 1 bis 5 beschrieben ist. Diese Abdeckhaube 6 ist wiederum in drei Sektoren A, B, C unterteilt, die sich jeweils über einen Sektor der Abdeckhaube 6, in Umfangsrichtung gesehen, von 120° erstrecken. In dieser Ausführungsform weisen die jeweiligen Sektoren A, B, C unterschiedliche Anzahlen von Öffnungen 16 auf, wobei der Sektor A dadurch gekennzeichnet ist, dass er keine dieser Öffnungen aufweist. Der Sektor B besitzt zwei Öffnungen 16, während der Sektor C eine Öffnung 16 besitzt. Die Öffnungen in Figur 7 sind mit dem Bezugszeichen 16 bezeichnet, da sie mit denjenigen Öffnungen des Ausführungsbeispiels der Figuren 1 bis 5 vergleichbar sind, die in unterschiedlicher Anzahl in den einzelnen Sektoren A, B, C vorhanden sind. Die Sektoren A, B, C sind derart aufgeteilt, dass sie jeweils einen Umfangsabschnitt der Abdeckhaube 6 von 120° umfassen.

Soweit in den verschiedenen Figuren Bauteile mit denselben Bezugszeichen bezeichnet sind, so können die Ausführungen zu einer Ausführungsform entsprechend auf die Bauteile der anderen Ausführungsform übertragen werden.

Die Abdeckhaube 6 der gezeigten Ausführungsbeispiele besitzt eine domartige Form, oder diejenige eines Teils eines Rotationsellipsoids mit der Linie 5 als Rotationsachse. Im unteren Bereich weist die Außenseite der Abdeckhaube eine Schräge zur Senkrechten von etwa 20° auf, um so den erforderlichen Innenraum für den Reinigungsstein 10 zu erhalten.

Das Sieb 9, auf dem der Reinigungsstein 10 aufliegt, ist in einer leuchtenden Farbe oder einer solchen Farbe ausgeführt, die sich von der Farbe der Außenseite der Abdeckhaube 6 deutlich absetzt. Wenn nun der Reinigungsstein 10 verbraucht ist, oder nahezu verbraucht ist, wird das Sieb 9 aufgrund seiner Farbe durch die Öffnungen 15, 16 sichtbar, ein Zeichen dafür, dass ein neuer Reinigungsstein 10 benötigt wird. In diesem Fall kann dann, je nach Aufbau des Geruchsverschlusses, der gesamte Geruchsverschluss ausgetauscht werden, um dann einen neuen Geruchsverschluss mit einem unter der Abdeckhaube 6 eingekapselten Reinigungsstein in das Urinal einzusetzen. Falls die Abdeckhaube 6 abnehmbar wäre, könnte auch unmittelbar vor Ort die Abdeckhaube 6 abgenommen werden und auf das Sieb 9 unter der Abdeckhaube 6 ein neuer Reinigungsstein aufgesetzt werden. Ersterer Fall ist aus hygienischen Gründen zu bevorzugen.

Der Verbrauch des Reinigungssteins 10 kann somit erkannt werden, ohne dass die Abdeckhaube 6 geöffnet werden muss. Dies stellt, neben der sich ergebenden Zeitersparnis, Vorteile unter Hygienegesichtspunkten dar. Möglich ist auch, die gesamte Abdeckhaube 6 aus einem transparenten oder transluzenten Material zu fertigen.

**Bezugszeichenliste**

| | | | |
|---|---|---|---|
| 1 | Einlauffläche | | |
| 2 | Rand | | |
| 3 | Dichtung | | |
| 4 | Ablaufstutzen / Ablauföffnung | | |
| 5 | strichpunktierte Linie | | |
| 6 | Abdeckhaube | | |
| 7 | topf- oder rohrförmiges Teil | | |
| 8 | Flächenteil | | |
| 9 | Sieb | | |
| 10 | Reinigungsstein | | |
| 11 | Verriegelungsteile | | |
| 12 | Hakenförmige Enden | | |
| 13 | rohrförmiger Distanzring | | |
| 14 | Durchlassöffnungen | | |
| 15 | erste Öffnungen | | |
| 16 | weitere Öffnungen | | |
| 17 | Linien | | |
| | | | |
| | | | |
| | | | |
| | | | |
| | | | |

## Patentansprüche

1. Geruchsverschluss für ein Urinal mit einer Einlauffläche (1), die mindestens eine Ablauföffnung (4) aufweist und mit einer auf die Einlauffläche (1) aufgesetzten, die Ablauföffnung (4) abdeckenden Abdeckhaube (6), die einen Raum umschließt, in den ein Reinigungsstein eingelegt ist, **dadurch gekennzeichnet, dass** die Abdeckhaube (6) um ihren Umfang verteilt Öffnungen (15, 16) aufweist, wobei
a. unter der Abdeckhaube (6) auf die Einlauffläche (1) ein Sieb (9) aufgesetzt ist, das farblich derart gestaltet ist, dass sich dessen Farbe deutlich unterscheidbar von der Farbe der Abdeckhaube (6) absetzt und/oder dass
b. zumindest der unter der Abdeckhaube (6) befindliche Bereich der Einlauffläche(1)farblich deutlich von der Farbe der Abdeckhaube (6) abgesetzt ist.

2. Geruchsverschluss nach Anspruch 1, **dadurch gekennzeichnet, dass** erste Öffnungen (15) auf einer gleichen Umfangslinie liegen.

3. Geruchsverschluss nach Anspruch 1 oder 2, **dadurch gekennzeichnet, dass**
a. die Abdeckhaube (6) in Umfangsrichtung gesehen in mindestens zwei Sektoren (A, B, C) unterteilt ist und/oder dass
b. die Abdeckhaube (6) in Umfangsrichtung gesehen mindestens einen Bereich aufweist, der frei von Öffnungen (15, 16) ist und/oder dass
c. die Abdeckhaube (6) in Umfangsrichtung gesehen mindestens einen Bereich aufweist, der frei von Öffnungen (15, 16) ist, wobei der Bereich, der frei von Öffnungen (15, 16) ist, einen Sektorabschnitt der Abdeckhaube (6), in Umfangsrichtung gesehen, von 30° bis 45° einnimmt.

4. Geruchsverschluss nach einem der Ansprüche 1 bis 3, **dadurch gekennzeichnet, dass** die Abdeckhaube (6) weitere Öffnungen (16) aufweist, die derart um den Umfang verteilt sind, dass jeder Sektor (A, B, C) eine unterschiedliche Anzahl Öffnungen (15, 16) aufweist.

5. Geruchsverschluss nach einem der Ansprüche 1 bis 4, **dadurch gekennzeichnet, dass** die Öffnungen (15, 16) von dem unteren Rand der Abdeckhaube (6) beabstandet sind.

6. Geruchsverschluss nach einem der Ansprüche 1 bis 5, **dadurch gekennzeichnet, dass** die ersten Öffnungen (15) gleichmäßig über den Umfang der Abdeckhaube (6) verteilt angeordnet sind und/oder dass die Abdeckhaube (6) einen Sektor (A, B, C) aufweist, in dem nur die ersten Öffnungen (15) angeordnet sind.

7. Geruchsverschluss nach einem der Ansprüche 1 bis 6, **dadurch gekennzeichnet, dass** die Abdeckhaube (6) in unterschiedlichen Orientierungen auf der Einlauffläche (1) anordenbar ist, um die mindestens zwei Sektoren (A, B, C) der Abdeckhaube (6) in einer bestimmten Stellung auszurichten.

8. Geruchsverschluss nach einem der Ansprüche 1 bis 7, **dadurch gekennzeichnet, dass** zumindest der sich unter der Abdeckhaube (6) befindliche Bereich der Einlauffläche (1) so farblich von der Farbe der Abdeckhaube (6) abgesetzt ist, dass die Farbe der Einlauffläche deutlich durch die Öffnungen in der Abdeckhaube erkennbar wird, wenn kein Reinigungsstein vorhanden oder ein solcher Reinigungsstein im Wesentlichen verbraucht ist..

9. Geruchsverschluss nach Anspruch 1 bis 8, **dadurch gekennzeichnet, dass** das Sieb (9) unter der Abdeckhaube (6) und/oder die Öffnungen (15, 16) in der Abdeckhaube (6) so positioniert ist/sind, dass zumindest Teile des Siebs (9) durch die Öffnungen (15, 16) sichtbar sind.

10. Geruchsverschluss nach einem der Ansprüche 1 bis 9, **dadurch gekennzeichnet, dass** das Sieb (9) eine leuchtende Farbe aufweist, insbesondere rot oder gelb ist.

11. Geruchsverschluss nach einem der Ansprüche 1 bis 10, **dadurch gekennzeichnet, dass**
a. die Abdeckhaube (6) eine domartige Form aufweist und/oder dass
b. die Abdeckhaube (6) eine Rotationssymmetrie aufweist und/oder dass
c. die Abdeckhaube (6) eine Rotationssymmetrie aufweist, wobei die Abdeckhaube (6) eine Rotationssymmetrie um eine Achse (5) aufweist, die senkrecht auf der Einlauffläche (1) steht.

12. Geruchsverschluss nach einem der Ansprüche 1 bis 11, **dadurch gekennzeichnet, dass** die Abdeckhaube (6) Verriegelungsteile (11) aufweist, die die Abdeckhaube (6) an der Einlauffläche (1) und/oder an weiteren Teilen unterhalb der Einlauffläche (1) lösbar halten.

13. Geruchsverschluss nach einem der Ansprüche 1 bis 12, **dadurch gekennzeichnet, dass**
a. im Bereich des unteren Rands der Abdeckhaube (6) Durchlassöffnungen (14) gebildet sind und/oder dass
b. im Bereich des unteren Rands der Abdeckhaube (6), zwischen dem unteren Rand der Abdeckhaube (6) und der Einlauffläche (1), Durchlassöffnungen (14) gebildet sind.

14. Geruchsverschluss nach den Ansprüchen 12 und 13, **dadurch gekennzeichnet, dass** der untere Rand der Abdeckhaube (6) durch die Verriegelungsteile (11) so auf Abstand zu der Einlauffläche (1) gehalten ist, dass sich dadurch die Durchlassöffnungen (14) ergeben.

15. Geruchsverschluss nach einem der Ansprüche 1 bis 14, **dadurch gekennzeichnet, dass** die jeweiligen Sektoren (A, B, C) der Abdeckhaube (6) dieselbe Größe aufweisen.

## Claims

1. Odor trap for a urinal with an inflow surface (1) having at least one drain opening (4) and with a covering cap (6) that is placed onto the inflow surface (1), thus covering the drain opening (4) and enclosing a space into which a cleaning block is inserted, **characterized in that** the covering cap (6) has openings (15, 16) that are distributed around its circumference, wherein
a. a screen (9) is placed onto the inflow surface (1) below the covering cap (6), with the screen (9) being designed to have a color that can be clearly differentiated from the color of the covering cap (6), and/or that
b. at least the area of the inflow surface (1) that is located under the covering cap (6) has a color that is clearly contrasting from the color of the covering cap (6).

2. Odor trap according to claim 1, **characterized in that** the first openings (15) lie on the same circumferential line.

3. Odor trap according to claim 1 or 2, **characterized in that**
a. the covering cap (6) is divided into at least two sectors (A, B, C), as seen in the circumferential direction, and/or that
b. the covering cap (6) has at least one area that is free of openings (15, 16), as seen in the circumferential direction, and/or that
c. the covering cap (6) has at least one area that is free of openings (15, 16), as seen in the circumferential direction, wherein the area that is free of openings (15, 16) occupies a sector portion of the covering cap (6) of 30° to 45°, as seen in the circumferential direction.

4. Odor trap according to one of claims 1 to 3, **characterized in that** the covering cap (6) has further openings (16) that are distributed around the circumference in such a manner that each sector (A, B, C) has a different number of openings (15, 16).

5. Odor trap according to one of claims 1 to 4, **characterized in that** the openings (15, 16) are arranged at a distance from the lower edge of the covering cap (6).

6. Odor trap according to one of claims 1 to 5, **characterized in that** the first openings (15) are arranged so as to be evenly distributed across the circumference of the covering cap (6) and/or that the covering cap (6) has a sector (A, B, C) in which only the first openings (15) are arranged.

7. Odor trap according to one of claims 1 to 6, **characterized in that** the covering cap (6) can be arranged in different orientations on the inflow surface (1) in order to align the at least two sectors (A, B, C) of the covering cap (6) in a certain position.

8. Odor trap according to one of claims 1 to 7, **characterized in that** at least the area of the inflow surface (1) that is located below the covering cap (6) is of a color that is contrasting to the color of the covering cap, so that the color of the inflow surface can be clearly seen through the openings in the covering cap if no cleaning block is present or if such a cleaning block is substantially used up.

9. Odor trap according to claim 1 to 8, **characterized in that** the screen (9) under the covering cap (6) and/or the openings (15, 16) in the covering cap (6) is/are positioned in such a manner that at least parts of the screen (9) are visible through the openings (15, 16).

10. Odor trap according to one of the claims 1 to 9, **characterized in that** the screen (9) is of a bright color, in particular red or yellow.

11. Odor trap according to one of the claims 1 to 10, **characterized in that**
a. the covering cap (6) has a dome-like shape, and/or that
b. the covering cap (6) has a rotational symmetry, and/or that
c. the covering cap (6) has a rotational symmetry, wherein the covering cap (6) has a rotational symmetry about an axis (5) that is perpendicular to the inflow surface (1).

12. Odor trap according to any one of claims 1 to 11, **characterized in that** the covering cap (6) has locking parts (11) that releasably hold the covering cap (6) at the inflow surface (1) and/or at other parts below the inflow surface (1).

13. Odor trap according to any one of claims 1 to 12, **characterized in that**
a. passage openings (14) are formed in the area of the lower edge of the covering cap (6), and/or that
b. passage openings (14) are formed in the area of the lower edge of the covering cap (6), between the lower edge of the coving cap (6) and the inflow surface (1).

14. Odor trap according to claims 12 and 13, **characterized in that** the lower edge of the covering cap (6) is held at a distance from the inflow surface (1) by the locking parts (11) in such a manner that passage openings (14) are created.

15. Odor trap according to one of claims 1 to 14, **characterized in that** the respective sectors (A, B, C) of the covering cap (6) have the same size.

## Revendications

1. Fermeture anti-odeurs destinée à un urinoir, munie d'une surface d'entrée (1) qui présente au moins une ouverture d'écoulement (4) et d'un capot de recouvrement (6) posé sur la surface d'entrée (1), recouvrant l'ouverture d'écoulement (4), lequel capot de recouvrement entoure un espace dans lequel est introduite une pierre de nettoyage, **caractérisée en ce que** le capot de recouvrement (6) présente des ouvertures (15, 16) réparties sur sa périphérie,
a. un crible (9) étant placé sous le capot de recouvrement (6) sur la surface d'entrée (1) qui a une couleur telle que sa couleur soit clairement différentiable de la couleur du capot de recouvrement (6) et/ou **en ce que**
b. au moins la région de la surface d'entrée (1) se trouvant sous le capot de recouvrement (6) étant clairement différentiable de par sa couleur de la couleur du capot de recouvrement (6).

2. Fermeture anti-odeurs selon la revendication 1, **caractérisée en ce que** des premières ouvertures (15) se situent sur une même ligne périphérique.

3. Fermeture anti-odeurs selon la revendication 1 ou 2, **caractérisée en ce que**
a. le capot de recouvrement (6), vu dans la direction périphérique, est divisé en au moins deux secteurs (A, B, C) et/ou **en ce que**
b. le capot de recouvrement (6), vu dans la direction périphérique, présente au moins une région qui est exempte d'ouvertures (15, 16) et/ou **en ce que**
c. le capot de recouvrement (6), vu dans la direction périphérique, présente au moins une région qui est exempte d'ouvertures (15, 16), la région qui est exempte d'ouvertures (15, 16) couvrant une section de secteur du capot de recouvrement (6), vue dans la direction périphérique, comprise entre 30° et 45°.

4. Fermeture anti-odeurs selon l'une quelconque des revendications 1 à 3, **caractérisée en ce que** le capot de recouvrement (6) présente des ouvertures supplémentaires (16) qui sont réparties sur la périphérie de telle sorte que chaque secteur (A, B, C) présente un nombre différent d'ouvertures (15, 16).

5. Fermeture anti-odeurs selon l'une quelconque des revendications 1 à 4, **caractérisée en ce que** les ouvertures (15, 16) sont espacées du bord inférieur du capot de recouvrement (6).

6. Fermeture anti-odeurs selon l'une quelconque des revendications 1 à 5, **caractérisée en ce que** les premières ouvertures (15) sont disposées de manière répartie uniformément sur la périphérie du capot de recouvrement (6) et/ou **en ce que** le capot de recouvrement (6) présente un secteur (A, B, C) dans lequel sont disposées seulement les premières ouvertures (15).

7. Fermeture anti-odeurs selon l'une quelconque des revendications 1 à 6, **caractérisée en ce que** le capot de recouvrement (6) peut être disposé dans différentes orientations sur la surface d'entrée (1), afin d'orienter les au moins deux secteurs (A, B, C) du capot de recouvrement (6) dans une position déterminée.

8. Fermeture anti-odeurs selon l'une quelconque des revendications 1 à 7, **caractérisée en ce qu'**au moins la région de la surface d'entrée (1) se trouvant sous le capot de recouvrement (6) est différentiable de par sa couleur de la couleur du capot de recouvrement (6) de telle sorte que la couleur de la surface d'entrée puisse être reconnue clairement à travers les ouvertures dans le capot de recouvrement, lorsqu'il n'y a pas de pierre de nettoyage ou qu'une telle pierre de nettoyage est essentiellement consommée.

9. Fermeture anti-odeurs selon les revendications 1 à 8, **caractérisée en ce que** le crible (9) est positionné sous le capot de recouvrement (6) et/ou les ouvertures (15, 16) sont positionnées dans le capot de recouvrement (6) de telle sorte qu'au moins des parties du crible (9) soient visibles à travers les ouvertures (15, 16).

10. Fermeture anti-odeurs selon l'une quelconque des revendications 1 à 9, **caractérisée en ce que** le crible (9) présente une couleur éclatante, en particulier rouge ou jaune.

11. Fermeture anti-odeurs selon l'une quelconque des revendications 1 à 10, **caractérisée en ce que**
a. le capot de recouvrement (6) présente une forme de type dôme et/ou **en ce que**
b. le capot de recouvrement (6) présente une symétrie de révolution et/ou **en ce que**
c. le capot de recouvrement (6) présente une symétrie de révolution, le capot de recouvrement (6) présentant une symétrie de révolution autour d'un axe (5) qui s'étend verticalement sur la surface d'entrée (1).

12. Fermeture anti-odeurs selon l'une quelconque des revendications 1 à 11, **caractérisée en ce que** le capot de recouvrement (6) présente des parties de verrouillage (11) qui retiennent de manière desserrable le capot de recouvrement (6) sur la surface d'entrée (1) et/ou sur d'autres parties en dessous de la surface d'entrée (1).

13. Fermeture anti-odeurs selon l'une quelconque des revendications 1 à 12, **caractérisée en ce que**
a. dans la région du bord inférieur du capot de recouvrement (6) sont formées des ouvertures de passage (14) et/ou **en ce que**
b. dans la région du bord inférieur du capot de recouvrement (6), entre le bord inférieur du capot de recouvrement (6) et la surface d'entrée (1), sont formées des ouvertures de passage (14).

14. Fermeture anti-odeurs selon les revendications 12 et 13, **caractérisée en ce que** le bord inférieur du capot de recouvrement (6) est maintenu par les parties de verrouillage (11) à distance de la surface d'entrée (1) de telle sorte que l'on obtienne ainsi les ouvertures de passage (14).

15. Fermeture anti-odeurs selon l'une quelconque des revendications 1 à 14, **caractérisée en ce que** les secteurs respectifs (A, B, C) du capot de recouvrement (6) présentent la même taille.
